# EUROPEAN PATENT APPLICATION

(11) **EP 4 734 581 A2**
(43) Date of publication of application: **29.04.2026**
(21) Application number: 26165210.1
(22) Date of filing: 07.07.2021
(51) Int. Cl.: H04W 12/75

(54) **TRANSMITTING METHOD IN AN INTELLIGENT TRANSPORT SYSTEM**

(30) Priority: 07.07.2020 GB 202010431; 06.11.2020 GB 202017597
(62) Divisional of application: 21184379.2
(71) Applicant: Canon Kabushiki Kaisha, Tokyo 146-8501 (JP)
(72) Inventor: SEVIN, Julien, 35517 Cesson-Sévigné Cedex (FR); NASSOR, ERIC, 35517 Cesson-Sévigné Cedex (FR); MORVAN, Isabelle, 35517 Cesson-Sévigné Cedex (FR)
(74) Representative: Casalonga France

(57) **Abstract**

The present invention concerns a method, intended for an Intelligent Transport System (ITS) comprising transmitting and receiving ITS stations, the method comprising the following steps, at a transmitting ITS station:
transmitting (1105) a first message including a first identifier identifying the transmitting ITS station, and including a first object identifier for identifying an object detected by the transmitting ITS station; and,
transmitting a second message identifying the transmitting ITS station with a second identifier different from the first identifier, the second message including a second object identifier for identifying the object previously identified with the first object identifier, the second object identifier being different from the first object identifier.

## Description

### FIELD OF THE INVENTION

The present invention relates to the field of Cooperative Intelligent Transport Systems (C-ITS) and, more particularly, to a system and technique that provides security and privacy for connected vehicle communication.

### BACKGROUND OF THE INVENTION

Cooperative Intelligent Transport Systems (C-ITS) is an emerging technology for future transportation management that aims at improving road safety, traffic efficiency and drivers experience.

Intelligent Transport Systems (ITS), as defined by the European Telecommunications Standards Institute (ETSI), include various types of communication such as:
- communications between vehicles (e.g., car-to-car), and
- communications between vehicles and fixed locations (e.g., car-to-infrastructure).

The use of ITSs is not restricted to road transport as such, as they also include the use of information and communication technologies (ICT) for rail, water and air transport, including navigation systems.

In general, the various types of ITSs rely on radio services for communication and use dedicated technologies.

ITS standards define a general architecture, specified in ETSI EN 302 665 and ISO 21217, and also define in particular the notion of ITS stations (denoted ITS-S). ITS stations may be any vehicles, Road Side Units (RSU), Vulnerable Road Users (VRU) carrying an ITS equipment (for instance, the ITS equipment may be included in a smartphone, a GPS, a smart watch or in a cyclist equipment), any other entities or infrastructures equipped with an ITS equipment, and central subsystems (back-end systems and traffic management centres).

In order to properly operate, ITSs may support various types of communications, for instance between vehicles (vehicle-to-vehicle (V2V), which refers in general to all kinds of road users, e.g., car-to-car) or between vehicles and fixed locations (vehicle-to-infrastructure (V2I) and infrastructure-to-vehicle (I2V), e.g., car-to-infrastructure). As ITSs are not restricted to road transportation, ITSs may also support communication dealing with information related to rail, water and air transport, including navigation systems.

ITS aims at making vehicles, infrastructure and other users to cooperate using exchange of messages (also called ITS message) between the ITS stations. ITS messages are not encrypted. Such exchanges of messages are performed through wireless networks, referred to as V2X networks (for "vehicle" to any kind of devices "X"). Examples of Such V2X networks may include 3GPP LTE-Advanced Pro, 3GPP 5G and IEEE 802.11p technology.

In terms of security, a Public Key Infrastructure (PKI) is implemented in order to provide digital certificates to the ITS stations. Although the ITS messages are not encrypted when exchanged over the V2X network, when receiving an ITS message, the receiving ITS station may authenticate the transmitting station based on its digital certificate.

One of the main requirements of a C-ITS security architecture is to ensure the privacy of the network.

The privacy is ensured within the PKI mechanism thanks to the two following principles:
- Pseudonymity ensuring that an ITS station may use a resource or service without disclosing its identity but can still be accountable for that use;
- Unlinkability ensuring that the greater the distance in time and space between two transmissions from a same device, the harder it is to determine that those two transmissions did in fact come from the same device.

To this end, the ITS stations are provisioned with a set of Pseudonym Certificates referred to as authorisation tickets (AT) delivered by a certification authority. Thus, when exchanging ITS messages within the ITS network, each ITS message, made of an unencrypted message, is accompanied with a given AT and a Digital Signature that validate the authenticity of the transmitting ITS station and the integrity of the message. The anonymity of the transmitting ITS station is ensured because each AT is associated with a pseudonym, also called ITS identifier, used by the ITS station to communicate within the ITS.

Besides, ATs are regularly changed according to a temporal AT change strategy performed by each ITS station. Therefore, as the change of AT causes the change of the pseudonym and the Digital Signature used by the station, a regular change of AT over time makes the tracking by the receiving stations very difficult or impossible, in a classic operating mode of the ITS. Indeed, typically, the stations of the ITS (the vehicles or the vulnerable road users VRU) may share their current state (such as their position, speed, acceleration...) using a Cooperative Awareness Message (CAM), as defined in the ETSI EN 302 637-2, (or VRU Awareness Messages (VAM) as ETSI TR 103 300). Such messages are received by the receiving ITS stations and help them to determine their local environment.

With the integration of sensors on the vehicles, on the Road Side Units or wearables by VRUs, the ITS stations have a new source information regarding their local environment. Information provided by the sensors, such as optical sensors, cameras, are used by the ITS stations to share, besides their current state, also their local environment, perceived through their sensors. It may consist in broadcasting a list of perceived objects with their current state by using dedicated messages called Collective Perception Message (CPM as ETSI TR 103 562 and ETSI TS 103 324). At their reception, the receiving ITS stations may either use the received list of perceived objects to update and increase their own perceived environment, or combine it with the content of others received ITS messages as CAM or VAM using a data sensor fusion algorithm.

The share of information about their local environment must also be in line with the privacy requirements. For instance, the exchanged CPMs must not allow a receiving ITS station to be able to track an ITS station also perceived by a transmitting ITS station.

An issue is that no privacy strategy has been specified for the broadcast of this list of perceived objects through dedicated messages, such as CPMs.

There is thus a need for a privacy strategy for the broadcast by the ITS stations of lists of perceived objects using CPM. Such a privacy strategy is required in order not to inhibit the existing AT change strategy performed by the C-ITS security architecture.

### SUMMARY OF INVENTION

The present invention seeks to overcome the foregoing concerns. In this context, according to a first aspect of the invention, it is provided a method, intended for an Intelligent Transport System (ITS) comprising transmitting and receiving ITS stations, the method comprising the following steps, at a receiving ITS station:
- receiving a first message including a first identifier of a first transmitting ITS station;
- identifying the first transmitting ITS station internally with a second identifier;
- receiving a second message including a third identifier of a second transmitting ITS station, the third identifier being different from the first identifier;
- determining that the first transmitting ITS station identified by a first identifier and the second transmitting ITS station identified by the third identifier are a same transmitting ITS station; and
- identifying the transmitting ITS station internally with a fourth identifier different from the second identifier, in replacement of the second identifier; and,
- transmitting a third message identifying the transmitting ITS station with the fourth identifier.

Such a method allows to ensure the privacy of the perceived objects. Indeed, as soon as a change of AT of a perceived object is detected, the receiving station thus reflects the AT change when sharing its perceived environment by also changing the object identifier of the perceived object.

Thus, although the messages of the receiving station sharing its perceived environment are intercepted by a malicious ITS station, the latter will not be able to use these messages to track the perceived objects. Indeed, in these messages, the identifiers of the perceived objects are modified as often as required by the AT change policies of the detected objects.

Such a method is reactive to AT change strategies implemented by the perceived ITS stations and enables the implementation of a flexible yet efficient privacy strategy for messages used to broadcast the list of the perceived objects by the receiving station.

Further, the method is compatible with the existing AT change strategy performed by the C-ITS security architecture, and do not interfere with it.

Correspondingly, the invention provides a receiving station of an Intelligent Transport System, ITS, the station comprising a processor configured to:
- receiving a first message including a first identifier of a first transmitting ITS station;
- identifying the first transmitting ITS station internally with a second identifier;
- receiving a second message including a third identifier of a second transmitting ITS station, the third identifier being different from the first identifier;
- determining that the first transmitting ITS station identified by a first identifier and the second transmitting ITS station identified by the third identifier are a same transmitting ITS station; and
- identifying the transmitting ITS station internally with a fourth identifier different from the second identifier, in replacement of the second identifier; and,
- transmitting a third message identifying the transmitting ITS station with the fourth identifier.
The receiving station has the same advantages as the method defined above.

Optional features of the invention are defined in the appended claims. Some of these features are explained here below with reference to a method, while they can be transposed into system features dedicated to any station of an Intelligent Transport System according to the invention.

According to some embodiments, the determining step may comprise:
- determining a first location of the first transmitting ITS station associated with the second identifier by analysing data captured by a sensor of the receiving ITS station;
- calculating a distance between the first location and a second location of the second transmitting ITS station identified by the third identifier, the second location being included in the second message; and,
- determining that the distance is below a predetermined threshold.

According to some embodiments, the method may further comprise countermeasure generating data characterising that the transmitting ITS station previously identified with the second identifier, and that the transmitting ITS station now identified with the fourth identifier corresponds to a same transmitting ITS station.

According to some embodiments, the first message and/or the second message may be a Vulnerable Road Users Awareness Message (VAM) or Cooperative Awareness Messages (CAM), and the third message may be a Collective Perception Message (CPM).

According to a second aspect of the invention, it is provided a method, intended for an Intelligent Transport System (ITS) comprising transmitting and receiving ITS stations, the method comprising the following steps, at a receiving ITS station:
- identifying itself with a first identifier for sharing information in the ITS;
- receiving, from a transmitting ITS station, a first message in which a second identifier is associated with the receiving ITS station;
- receiving, from the same transmitting station, a second message in which a third identifier is associated with the receiving ITS station, the second identifier being different from the third identifier;
- identifying the receiving ITS station with a fourth identifier for sharing information in the ITS, the fourth identifier being different from the first identifier and in replacement of the first identifier.

Such a method enables a receiving station to implements AT change measures when detecting that another ITS station, sharing information about the receiving station (when sharing its perceived objects), has changed the identifier of the receiving station.

As the change by the other station may be triggered by the detection in its vicinity of a malicious ITS station, such a method enables to improve the privacy of the receiving station which may not have detected the malicious ITS station.

This method thus may constitute a countermeasure to the detection of a malicious ITS station, and more generally improve the privacy of the receiving station.

Correspondingly, the invention provides a transmitting station of an Intelligent Transport System, ITS, the station comprising a processor configured to:
- transmitting a first message including a first identifier identifying the transmitting ITS station;
- determining if another transmitting or receiving ITS station is in the vicinity of said transmitting ITS station, and/or if a sensor associated to a RSU receiving station can detect said transmitting ITS station; and if not;
- transmitting a second message identifying the transmitting ITS station with a second identifier different from the first identifier.

The transmitting station has the same advantages as the method defined above.

Optional features of the invention are defined in the appended claims. Some of these features are explained here below with reference to a method, while they can be transposed into system features dedicated to any station of an Intelligent Transport System according to the invention.

According to a third aspect of the invention, it is provided a method, intended for an Intelligent Transport System (ITS) comprising transmitting and receiving ITS stations, the method comprising the following steps, at a transmitting ITS station:
- transmitting a first message including a first identifier identifying the transmitting ITS station;
- determining if another transmitting or receiving ITS station is in the vicinity of said transmitting ITS station, and/or if a sensor associated to a RSU receiving station can detect said transmitting ITS station; and if not;
- transmitting a second message identifying the transmitting ITS station with a second identifier different from the first identifier.

The method according to the third aspect makes it possible to adapt time of the sending of messages including a new identifier associated with a new AT changed according to the AT change strategy of the transmitting ITS station. Depending on whether the privacy of the transmitting station is ensured or not, the sending of messages, with the new identifier is maintained or delayed.

Thus, if the transmitting station is exposed to a risk of eavesdropping, the sending of messages, with the new AT and the new associated identifier, is then delayed to a later time.

Such a method makes it possible to prevent a transmitting ITS station to send messages with its new AT (equivalent to a new identity) when the messages of the transmitting station are very likely to be intercepted.

Correspondingly, the invention provides a transmitting station of an Intelligent Transport System, ITS, the station comprising a processor configured to:
- transmitting a first message including a first identifier identifying the transmitting ITS station;
- determining if another transmitting or receiving ITS station is in the vicinity of said transmitting ITS station, and/or if a sensor associated to a RSU receiving station can detect said transmitting ITS station; and if not;
- transmitting a second message identifying the transmitting ITS station with a second identifier different from the first identifier.
The transmitting station has the same advantages as the method defined above.

Optional features of the invention are defined in the appended claims. Some of these features are explained here below with reference to a method, while they can be transposed into system features dedicated to any station of an Intelligent Transport System according to the invention.

According to some embodiments, the determining step may comprise:
- receiving a message comprising a list of perceived objects;
- comparing the distance between the transmitting ITS station and at least some of the perceived objects to a predetermined threshold.

According to some embodiments, the determining step may comprise:
- computing an eavesdropping area privacy value based on at least one among: a number of objects detected by sensors of the transmitting ITS station, a number of detected ITS stations and/or a number of perceived objects identified in received CPMs; and,
- comparing the eavesdropping area privacy value to a predetermined threshold.

According to some embodiments, the number of detected ITS stations may be determined by analysing received ITS messages.

According to some embodiments, transmitting a second message may comprise:
- determining an elapsed period of time from the association of the first identifier with the transmitting ITS station;
- comparing the elapsed period of time with a predetermined threshold; and,
- transmitting the second message if the elapsed period of time is greater than the predetermined threshold.

According to a fourth aspect of the invention, it is provided a method, intended for an Intelligent Transport System (ITS) comprising transmitting and receiving ITS stations, the method comprising the following steps, at a transmitting ITS station:
- transmitting a first message including a first identifier identifying the transmitting ITS station, and including a first object identifier for identifying an object detected by the transmitting ITS station; and,
- transmitting a second message identifying the transmitting ITS station with a second identifier different from the first identifier, the second message including a second object identifier for identifying the object previously identified with the first object identifier, the second object identifier being different from the first object identifier.

Correspondingly, the invention provides a transmitting station of an Intelligent Transport System, ITS, the station comprising a processor configured to:
- transmitting a first message including a first identifier identifying the transmitting ITS station, and including a first object identifier for identifying an object detected by the transmitting ITS station; and,
- transmitting a second message identifying the transmitting ITS station with a second identifier different from the first identifier, the second message including a second object identifier for identifying the object previously identified with the first object identifier, the second object identifier being different from the first object identifier.

Another aspect of the invention relates to a computer program product for a programmable apparatus, the computer program product comprising a sequence of instructions for implementing any method as defined above, when loaded into and executed by the programmable apparatus.

Another aspect of the invention relates to a computer-readable storage medium storing instructions of a computer program for implementing any method as defined above.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer-readable code for provision to a programmable apparatus on any suitable carrier medium. A tangible carrier medium may comprise a storage medium such as a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Further advantages of the present invention will become apparent to those skilled in the art upon examination of the drawings and detailed description. Embodiments of the invention will now be described, by way of example only, and with reference to the following drawings, in which:
**Figure 1** illustrates an Intelligent Transportation System, ITS system, in which embodiments of the invention may be implemented;
**Figure 2** illustrates security mechanisms implemented in an ITS;
**Figure 3** schematically illustrates functional blocks of an ITS station in accordance with embodiments of the present invention;
**Figure 4** illustrates the structure of a Collective Perception Message as defined in ETSI TR 103 562 specification;
**Figure 5** describes, using a flowchart, steps of a first processing method for enhancing privacy of an ITS system in which an ITS station shares its perceived environment with another ITS station through a CPM, according to an embodiment of the present invention.
Figure **6** includes **figures 6a** and **6b** which illustrate, using flowcharts, steps of a second and third processing methods enhancing the privacy of an ITS system in which an ITS station shares its perceived environment with another ITS station through a CPM, according to an embodiment of the present invention.
**Figure 7** describes, using a flowchart, steps of a fourth processing method enhancing privacy of an ITS system in which an ITS station shares its perceived environment with another ITS stations through a CPM, according to an embodiment of the present invention.
**Figure 8** describes, using two flowcharts, steps of a fifth processing method enhancing privacy of an ITS system in which an ITS station shares its perceived environment with another ITS station through a CPM, according to an embodiment of the present invention.
**Figure 9** describes steps of a transmitting method enhancing privacy of an ITS system in which an ITS station shares its perceived environment with another ITS station through a CPM, according to an embodiment of the present invention.
**Figure 10** describes, using flowcharts, steps of a transmitting method enhancing privacy of an ITS system in which an ITS station shares its perceived environment with another ITS station through a CPM, according to an embodiment of the present invention.
**Figure 11** describes using flowcharts, steps of a transmitting method enhancing privacy of an ITS system in which an ITS station shares its perceived environment with another ITS station through a CPM, according to an embodiment of the present invention.

### DETAILED DESCRIPTION

The names of the lists and elements (such as data elements) provided in the following description are only illustrative. Embodiments are not limited thereto and other names could be used.

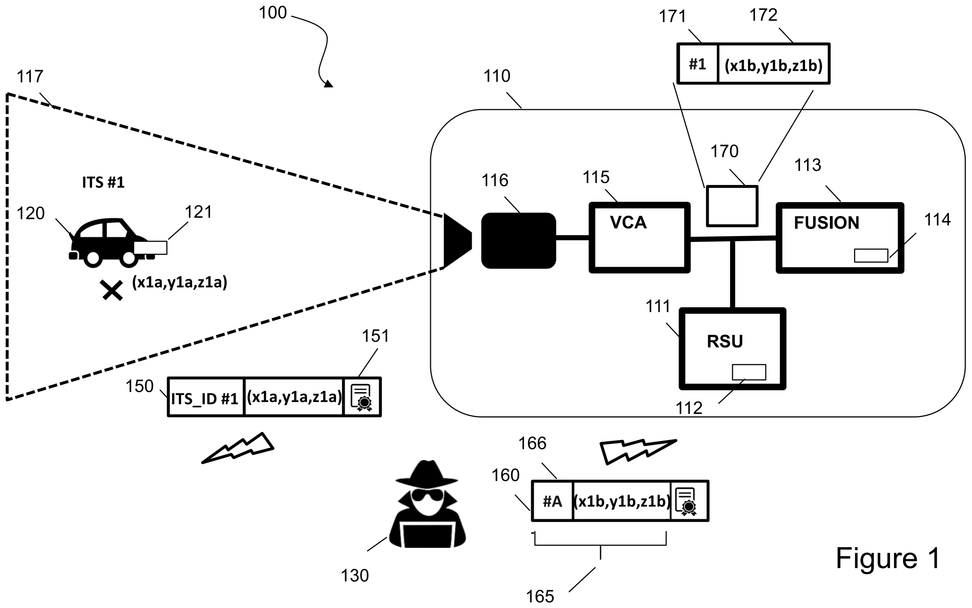

The embodiments of the present invention are intended to be implemented in an Intelligent Transportation System (ITS). An example of such a system 100 is illustrated in **Figure 1****.**

In this example, the ITS comprises a fixed road side entity 110 and a vehicle 120. The vehicle 120 included in the ITS are also referred to ITS vehicle. In order to ensure the cooperation within the ITS, the vehicle 120 includes respectively a Vehicle ITS Station (V-ITS-S) 121 and the fixed road side entity 110 contains a Roadside ITS Station (R-ITS-S) 112 included in a Road Side Unit (RSU) 111. The architecture of the ITS stations (V-ITS-S and R-ITS-S) is defined in the version V1.1.1 of the ETSI EN 302 665 specification.

Cooperation within the ITS 100 is achieved by the exchange of specific messages, also called ITS messages, among these ITS stations. The exchange of ITS messages is performed using wireless networks, called V2X networks, examples of which may include 3GPP LTE-Advanced Pro, 3GPP 5G and IEEE 802.11p technology. ITS messages enable the ITS stations to share information, alerts in order to warn and/or inform the vehicles and users. For the sake of clarity, in the subsequent description, an ITS station sending an ITS message is referred to below as a transmitting ITS station or an originating ITS station while an ITS station that receives an ITS message is referred to below as a receiving ITS station.

To secure V2X communications within ITS 100, a Public-Key-Infrastructure (PKI) (as defined in the version 1.1.1 of the ETSI TS 102 731 specification) may be used. PKI provides security and verification and thus enables the receiving station to determine whether it should trust the transmitting ITS station. The PKI based mechanism implemented in ITS is adapted in order to comply General Data Protection Regulation (GDPR) and to protect the privacy of the users of the system.

The privacy is ensured within the PKI mechanism thanks to the two following principles:
- Pseudonymity ensuring that an ITS station may use a resource or service without disclosing its identity but can still be accountable for that use;
- Unlinkability ensuring that the greater the distance in time and space between two transmissions from a same device, the harder it is to determine that those two transmissions did in fact come from the same device.

Thus, ITS messages exchanged within the ITS comprise an unencrypted message accompanied with a Digital Signature and a Pseudonym Certificate that validate the authenticity of the transmitting ITS station and the integrity of the message, while keeping anonymity of the transmitting ITS station.

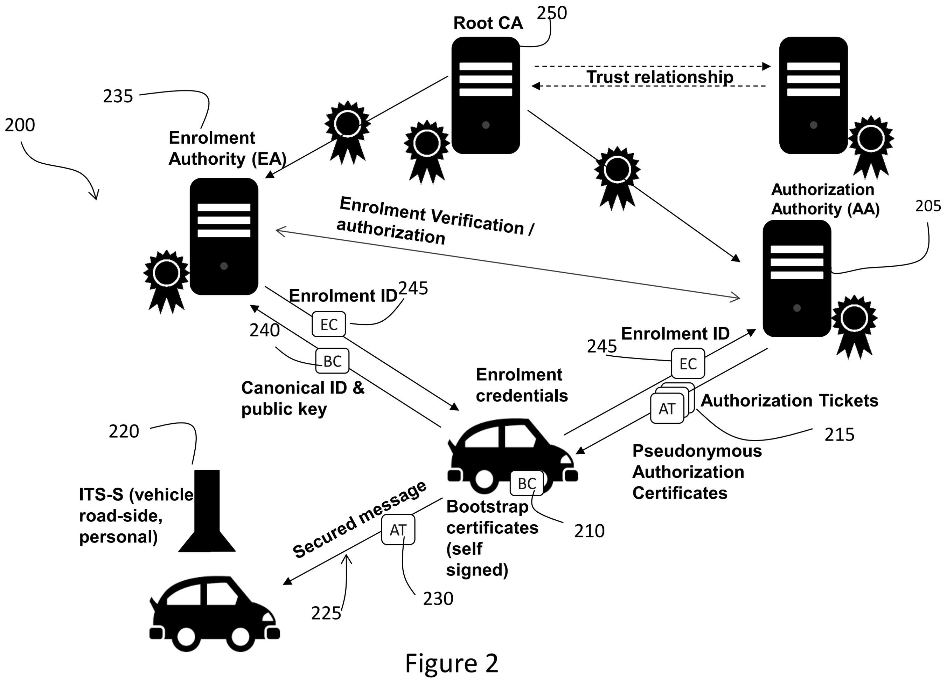

An example of a PKI-based mechanism 200 is illustrated in Figure 2. The PKI-based security is implemented through the use of certificates delivered by a certification authority to the ITS stations.

As part of the ITS station manufacturing process, a set of information elements 240 associated with the identity of the ITS station is established by the Enrolment Authority (EA) 235 as defined in the version 1.2.1 of the ETSI TS 102 941 specification. The set of information elements 240 is then registered within the ITS station and the EA 235.

As an example, the set of information elements 240 may comprise:
- A canonical identifier: it is an identifier that uniquely identifies the ITS station. In other words, the canonical identifier is equivalent to the ITS station identity.
- A public/private key pair for cryptographic purpose based on PKI mechanism.

Based on this set of information elements, the EA 235 generates an Enrolment Certificate 245 which comprises a pseudonym provided to the ITS station during the enrolment process. The pseudonym is used for anonymity and is referred to as Enrolment Identity (Enrolment ID).

Next, after having enrolled with the EA 235, the ITS station requests an Authorisation Authority 205 (AA) for specific services and permission within the EA's domain and AA's Authorisation context. In particular, the AA 205 checks the Enrolment Certificate 245 included in the request (more specifically, the AA checks the Enrolment ID included in the Enrolment Certificate 245). Then, if the Enrolment Certificate 245 is suitable, the AA 205 provides multiple Pseudonym Certificates referred to as Authorisation Tickets (AT) 215. Each AT 215 includes a pseudonym of the ITS station to be used in V2X communication, to ensure its privacy when interacting within the ITS network.

From this security procedure, an ITS station 210 selects an AT among its available multiple ATs 215 for a given period before switching to another AT in order to prevent the linkability. The change of AT may be performed according to an AT change strategy.

According to some embodiments, each ITS message 225 sent during the given period includes the selected AT 230 and the pseudonym ITS identifier corresponding to the selected AT 230.

According to some embodiments, an ITS message 225 may contain a link to the selected AT 230 which is transmitted by other means, e.g. in a different message or using another transmission mean.

According to some embodiments, the pseudonym ITS identifier from the selected AT is also indicated in the header of the ITS message 225.

According to some embodiments, an ID is indicated in the ITS message header. The ID may not be the ITS pseudonym, but a value linked to the ITS pseudonym, selected by the transmitting ITS station 210. Thus the change of the value of the ID reflects the change of the selected AT 230 and the associated pseudonym.

When receiving a message 225, the receiving ITS station 220, verifies the AT 230 in order to ensure that the transmitting ITS station 210 has the privileges and authorisations to transmit specific ITS messages 225.

ETSI standards does not specify a particular AT change strategy, but rather provides recommendations, as the one in the document ETSI 103 415 - *Pre-standardisation study on pseudonym change management.*

In particular, this document highlights the recommendations of the Car-2-Car Communication Consortium reported in a document called *"Position Paper Regarding Personal Data Protection Aspects in C-ITS".* The recommendations mainly consist in separating each trip of an individual (in an ITS vehicle or carrying an ITS device) in at least three segments:
- The first segment being the starting point of the trip, i.e., a relevant geographical location for the individual from where the trip starts;
- The second segment, also called mid segment, composed of several geographical locations, having no particular interest for the individual; and
- The third segment being the place of destination of the tip, i.e., a relevant geographical location for the individual where the trip ends;

The recommendations encourage to ensure the privacy of the individual along his/her way, i.e., of the at least three segments. In other words, during the first and third segments, the pseudonym may be changed at least once.

Moreover, a pseudonym change (meaning the authorisation ticket change) may be triggered at the interruption of a trip, including for example the end of a trip and the start of a new trip. According to some embodiments, the detection of the end of a trip and start of a new trip may rely on the detection of the ignition being off for at least a predetermined period of time (such as 10 minutes), and the detection of the ignition being on and/or movement detection.

During the trip, the pseudonym may be changed randomly, more than once. According to some recommendations, the change of pseudonym may be performed randomly during the trip, for example every 800 to 1500 meters starting from the start position. According to some embodiments, the pseudonym may be changed at least 800 m from the last change of pseudonym, and within an interval of 2 to 6 minutes from the last change of pseudonym. These methods may insure with a high probability to an individual to use different pseudonyms during the three segments of his/her trip.

Several types of messages are specified in the ITS standard. One of them is called the Cooperative Awareness Message (CAM as defined in the version 1.3.1 of the ETSI EN 302 637-2 specification), and it may be used by transmitting stations to advertise information about themselves to the other stations of the ITS network. As an example, the shared information that may be called ITS information, may be related to their current station (position, speed, length, width, angle, etc.), their operational status (ON/OFF), their operational problems, etc. Another type of message, called Vulnerable Road Users Awareness Message (VAM), defined in the standard ETSI TS 103 300-2 (version V0.4.2), may be used by Vulnerable Road Users (VRU), such as pedestrians, cyclists as well as motorcyclists and also persons with disabilities or reduced mobility and orientation, carrying an ITS equipment. Such ITS equipment may be for instance included in a smartphone, a GPS, a smart watch or in a cyclist equipment, etc. Typically, VAM may be used by VRU to advertise a list of information relative to the current state of its VRU ITS station (VRU ITS-S), such as its position, type, size, weight, speed, direction or orientation, to other ITS stations of the ITS network. The rest of the description is detailed in relation to CAM but it may be applied to VAM or to other similar ITS messages.

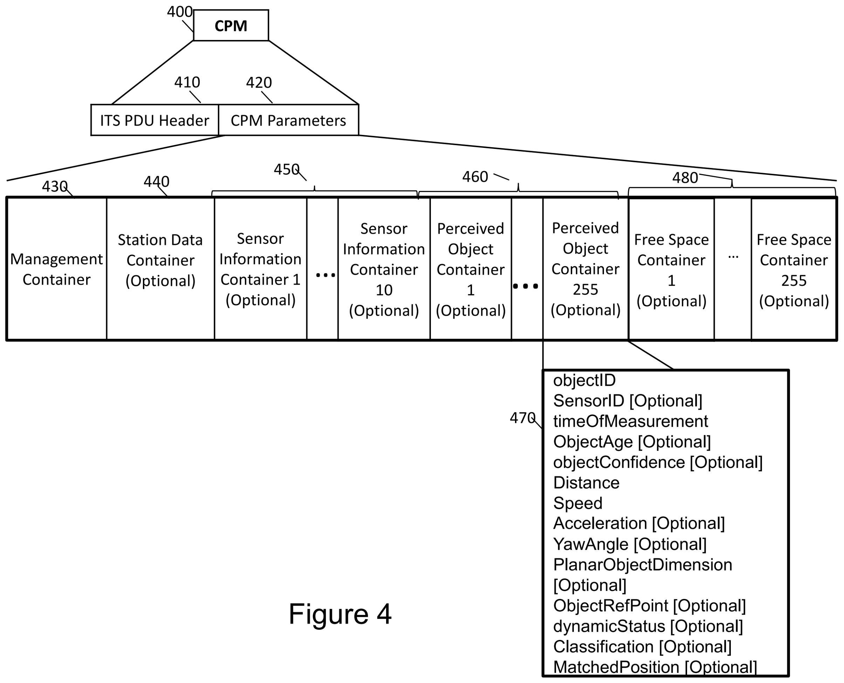

Moreover, a so-called Collective Perception Message (CPM as defined in document ETSI TR 103 562 and ETSI TS 103 324) is used by transmitting ITS stations to enable them sharing their perceived environment with receiving ITS stations. In other words, the CPMs are sent by the transmitting ITS stations, and comprises information about their surrounding environment retrieved from their respective embedded perception sensors. An example of CPM message is illustrated in Figure 4, and is described in further details thereafter. According to some embodiments, the CPM may provide description information describing each object perceived by the embedded sensors of an ITS station. The perceived objects may be for example other ITS stations (e.g., vehicles, coaches, pedestrians, bicycles equipped with an OnBoard Unit, OBU, or Road Side Units able to send ITS messages) or other road users who are not ITS stations e.g., mere pedestrians, bicycles, deprived of OBU.

To return to the example of the ITS 100 illustrated in Figure 1, within the ITS 100, the position of the ITS stations 120 may be determined (by themselves), for example using the absolute geographical coordinates given by using the WGS84 coordinate system as defined in ETSI TS 102 894-2. Thus, each ITS station may determine its position, for example using its latitude (x), its longitude (y) and its altitude (z) in the WGS84 coordinate system. Alternatively, other geographical coordinates may be considered. In the illustrated example, the ITS vehicle 120 is located at the position (x1a,y1a,z1a) with x1a corresponding to its latitude, y1a to its longitude and z1a to its altitude.

The ITS vehicle 120 periodically sends CAMs 150 to share its position (x1a,y1a,z1a) to other ITS stations using a pseudonym ITS identifier referred to as ITS_ID#1. Further to the ITS station position, the CAM 150 thus comprises the ITS identifier ITS_ID#1, preferably in the header of the CAM, the AT 151 being linked to the ITS identifier ITS_ID#1.

As explained hereinbefore, in order to prevent the linkability, after a given period determined in a AT change strategy, ITS vehicle 120 may decide to change, over time, its AT and consequently its pseudonym ITS identifier ITS_ID#1, and use a new AT for which a new pseudonym ITS identifier is associated referred to as ITS_ID#3.

CAMs 150 may be received by the RSU 111 included in the fixed road side entity 110. RSU 111 forwards CAM 125 to an interconnection module 113 to which it is wire-connected.

Road side entity 110 also includes a set of perception or onboard sensors, such as image sensors, here a video camera 116, connected to an analysis module 115, here a Video Content Analytics (VCA) module. The video camera 116 is configured to scan the (dashed) area 117, and thus generates images of the area 117. The video camera 116 and VCA module 115 are connected so that the VCA module 115 processes the stream captured by the sensors/video camera 116. The processing by the VCA module 115 aims at detecting objects potentially present in area 117, referred to as "perceived objects" hereinafter. The VCA module 115 is also configured to output a list of the perceived objects respectively associated with corresponding description information referred to as "state vector". The state vector may include for instance parameters as position, speed, acceleration, classification (meaning the type of object, whether it is a vehicle, a bike or a pedestrian), etc. For each perceived object is assigned an identifier, referred to as onboard local identifier, which allows to track it over consecutive video frames.

The list of the perceived objects is then encoded into Collective Perception Messages (CPM). The VCA module 115 is connected to the interconnection module 113 and sends CPM messages to it via its connection.

In the illustrated example, by scanning the area 117, the VCA module 115 has captured a perceived object corresponding to the vehicle 120 at a position (x1b, y1b, z1b).

The VCA module 115 thus sends a perceived list 170, comprising in particular a perceived object that corresponds to the vehicle 120. In this list, the perceived object is associated with an onboard local identifier 171 set to #1 and a state vector 172 including for instance the position (x1b, y1b, z1b).

The interconnection module 113 includes a sensor data fusion module 114. The sensor data fusion module 114 processes both the objects corresponding to ITS messages (CAMs) received from RSU 111 and the perceived objects included into the perceived list 170 received from VCA module 115 in order to update its perceived local environment. The updating may be performed by storing all the perceived objects and their current state in a local database referred to as a local dynamic map.

Further, the sensor data fusion module 114 is able to detect an AT change of a given ITS station using tracking algorithms and comparing consecutive current states over the time either predicted or received from ITS messages and/or perceived list.

In the illustrated example, the sensor data fusion module 114 detects the change of the ITS identifier of the ITS station 121 of the ITS vehicle 120 from ITS_ID#1 to ITS_ID#3. Such a change of the ITS identifier of the ITS station 121 indicates that the ITS station 121 has changed its AT.

The perceived list 170 may also be sent to the RSU 111, and more particularly to its Roadside ITS Station (R-ITS-S) 112 which comprises a CPM service as defined in ETSI TR 103 562 and ETSI TS 103 324.

In particular, CPM service encodes the perceived list 170 into a message referred to as a CPM 160 as described with reference to Figure 4. According to some embodiments, the CPM service assigns to each perceived object of the perceived list a perceived object container.

In order to track the perceived objects over consecutive CPMs addressed to the receiving ITS stations, the CPM service assigns an identifier for each perceived object, referred to as "object identifier". According to some embodiments, the object identifiers may be integer values. Besides, the CPM service may set the value of the object identifier in the field "objectID" of the perceived object container.

In the illustrated example, based on the perceived list 170, the CPM service of the road side entity 110 generates a CPM 160. The generated CPM comprises a perceived object container 165 associated with the perceived object corresponding to the vehicle 120. The perceived object container comprises a field "objectID" 166, which is set to the object identifier #A (e.g. corresponding to an integer value). The CPM 160 may be sent wirelessly by RSU module 112.

In the illustrated ITS 100, an attacker 130 is present, also referred to as a malicious listener or a malicious eavesdropper.

The attacker 130 aims at tracking the ITS stations present in its vicinity (including the area 117) by intercepting the exchanged ITS messages. According to some embodiments, the attacker may comprise onboard sensors.

According to some embodiments, the attacker 130 may be an ITS station able to send ITS messages or able to be quiet.

In the illustrated example, the attacker 130 tracks the ITS vehicle 120 by processing the CAMs 150 messages (received from the vehicle 120) and the CPMs 160 (received from Road side entity 110) which contain an "objectID" value that corresponds to the ITS vehicle 120.

More generally, according to some embodiments, the attacker 130 may use a data fusion algorithm to track the ITS stations in its vicinity and identify their AT change. For example, the data fusion algorithm may comprise the fusion of data of:
- intercepted CAMs: in these messages the ITS stations transmit data about themselves including their location;
- intercepted CPMs: in these message the ITS stations transmit data about the objects that they perceived through their embedded sensors;
- (optionally) the embedded sensors of the attacker 130, such as a video camera.

To do that, a track to track algorithm is used, which may for example consist in comparing the location of the different objects (the transmitting station of the CAMs, the perceived objects of the CPM, and the perceived object by the attacker 130). For example, the nearest neighbour algorithm may be applied in order to identify a potential association between the objects from the CAM, CPM and the embedded sensor of the attacker 130.

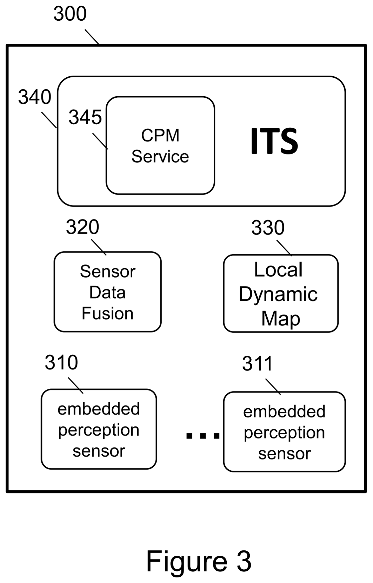

**Figure 3** illustrates an example of ITS station 300, schematically represented with functional blocks. The illustrated ITS station 300 comprises modules required to implement embodiments of the invention.

All the ITS stations may be configured to act as both transmitting ITS stations (i.e., when they send ITS messages) and receiving ITS stations (i.e., when they receive ITS messages).

An ITS station 300 includes a set of one or more embedded perception sensors 310 and 311, a sensor data fusion module 320, a Local Dynamic Map module 330 and an ITS module 340.

The embedded perception sensors 310 and 311 may be identical, meaning based on the same technology, or different. The embedded perception sensor may be for example a camera, a RADAR, a radio or a LiDAR.

Each sensor 310, 311 acquires sensor raw data which are then forwarded to an analysis module, for example the VCA. According to some embodiments, the sensor raw data are processed by a VCA algorithm to generate a list of objects (referred to as perceived list) perceived by the ITS station.

The ITS module 340 integrates all the ITS functionalities. In particular, in the context of the invention, the ITS module 340 is configured to manage the emission and the reception of ITS messages (VAM, CAM, CPM). The ITS module 340 also implements security mechanisms, including PKI-based mechanisms and in particular the AT change procedure. Further, the ITS module 340 further includes a CPM service 345 configured to handle functions related to CPM messages (for example the receiving and the transmitting of CPM messages).

The objects identified from the received ITS messages are sent to a data fusion module 320.

The data fusion module 320 is configured to merge perceived objects identified from information provided by the perception sensors 310 and 311 and the ITS module 340.

The data fusion module may comprise tracking algorithms capable of detecting the change of AT of a given ITS station.

The data fusion module 320 may be connected to a Local Dynamic Map module 330 (defined in the version 1.1.1 of the ETSI TR 102 863 specification). The Local Dynamic Map 330 centralises the analysed data outputted by the data fusion module 320 in order to give the ITS station 300 a full understanding of its current local perceived environment.

Although it is not illustrated in Figure 3, the ITS station comprises a central processing unit, also called "processor" or "microprocessor" or "CPU", coupled with data storage means, such as a hard disk, for storing computer programs for implementing the methods according to embodiments of the invention by the CPU. The ITS station may also comprise random access memory or storing the executable code of methods according to embodiments of the invention as well as the registers adapted to record variables and parameters necessary for implementing methods according to embodiments of the invention.

As mentioned above, **Figure 4** illustrates the structure of a CPM (Collective Perception Message) as defined in the version 0.0.20 of the ETSI TR 103 562 specification.

As explained earlier, CPMs are used by transmitting ITS stations to enable them sharing their perceived environment with receiving ITS stations. The transmitting ITS station may be either a vehicle or a stationary RSU.

The illustrated CPM 400 comprises an ITS PDU Header 410 and a "CPM Parameters" field 420.

The ITS PDU Header 410 may comprise a data element (DE) relative to an identifier (DE_StationID) identifying the transmitting ITS station within the ITS system.

The "CPM Parameters" field 420 comprises the following subfields:
- Management Container 430: the Management Container 430 may be used to specify information regarding the Station Type and the Reference Position of the transmitting ITS Station;
- a Station Data Container 440: in case of a CPM generated by a vehicle, the Station Data Container 440 contains the dynamic information of the transmitting ITS Station. Such information in the Station Data Container 440 is mandatory when the transmitting ITS stations is embedded in a vehicle. In case of a CPM generated by a RSU, the Station Data Container may provide references to identification numbers provided by a MAP Message (CEN ISO/TS 19091) disseminated by the same RSU. MAP (MapData) Messages may be used by the RSU in order to broadcast to other ITS station in its vicinity information relating to the road geometry where the RSU is located. These references are required in order to match data provided by the CPM to the geometry of an intersection or road segment as provided by the MAP message. It is not required that a RSU has to transmit a MAP message for matching objects to road geometries. In this case, the Station Data Container may be omitted. It is for this reason that the Station Data Container is set as optional.

- a set of optional Sensor Information containers (SIC) 450: these subfields are optional and may be used to provide information about the sensory capabilities (e.g., position, type of the sensors) of an ITS station. Depending on the station type of the transmitting ITS station, different container specifications are available to encode the properties of a sensor. The Sensor Information Containers are attached at a lower frequency than the other containers, as defined in ETSI TR 103 562. Up to ten containers of this type may be added;
- a set of optional Perceived Object Containers (POC) 460: these subfields are optional and are made of a sequence of optional or mandatory data elements 470, DEs, which give a detailed description of the dynamic state and properties of the detected (i.e., perceived) object. The DEs 470 may thus contain information relating to each perceived objects of the perceived list, including for example the object identifier objectID, its position, its state identifier and its local onboard identifier, etc. Thus, the Perceived Object Containers 460 are provided when at least one object has been perceived by the transmitting ITS station using its local onboard sensors; and
- a set of optional Free Space Container (FSC) 480: these subfields are optional and may comprise information relating to the free spaces in the perceived area.

The invention focuses on the DE 470 in particular the one referred to as "objectID" which is assigned by the transmitting ITS station to each detected object.

According to some embodiments, the identifier objectID, also referred to as "object identifier" by the ITS station, is taken from a range of monotonously increasing numbers, for example integer numbers. The object identifier is maintained for each object, as long as the object is perceived, that is to say that new sensor measurements are assigned to the object. As there is no object identifier change strategy, it may be possible for an attacker 130, intercepting/receiving the CPMs of the transmitting station, to indirectly track a perceived object, as long as this object is perceived by the transmitting station.

According to some embodiments, the range of allowed objectIDs is between 0 and 255. When the objectID 255 has been assigned to an object, the next perceived object gets assigned the object identifier equal to zero.

To ensure the privacy of the perceived objects, the present invention provides several methods to reflect the AT change policies of the ITS stations in the exchanged messages such as CPM.

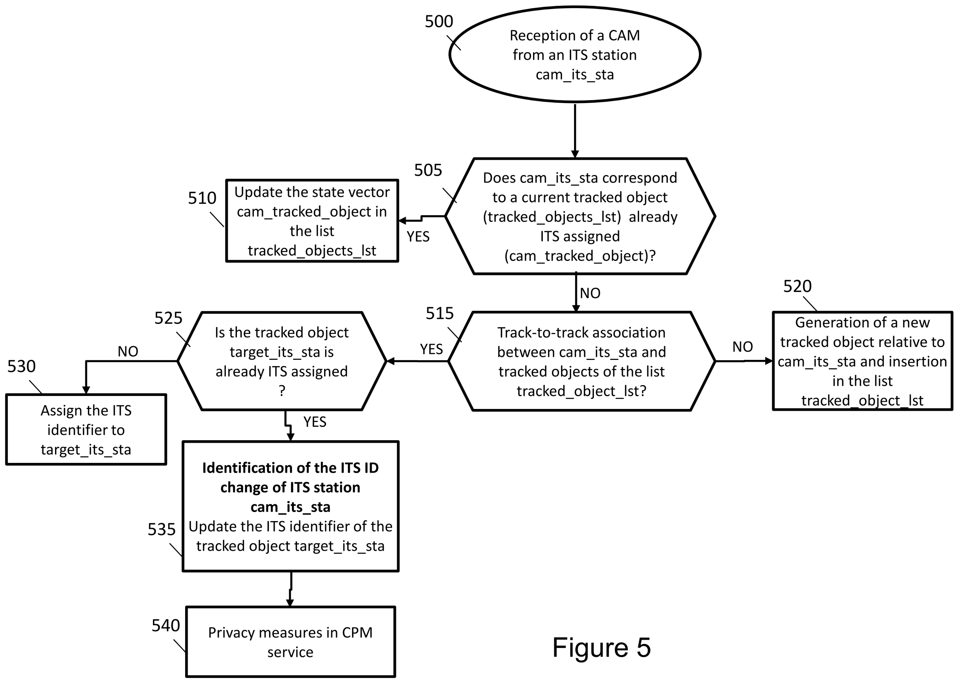

**Figure 5** describes, using flowcharts, steps of a first example of processing method for enhancing privacy in an ITS system, in particular when an ITS station shares its perceived environment with another ITS station using CPMs.

The illustrated algorithm may be implemented by a transmitting ITS station, such as a Vehicle ITS Station V-ITS-S 121 or a Roadside ITS Station R-ITS-S 112.

For the purpose of illustration, with reference to Figure 1, the algorithm is implemented in the Road Side ITS station R-ITS-S 112. As explained above, the R-ITS-S 112 comprises a CPM service 345 and consequently can send CPMs 160 to the other (receiving) ITS stations of the ITS system. The algorithm continuously retrieves the perceived environment of the transmitting ITS station from the Local Dynamic Map 230 or directly from its data fusion module 114.

According to some embodiments, the retrieved perceived environment may be stored as a list of tracked objects, referred to as tracked_object_lst.

In this case, a tracked object may preferably correspond to an object perceived through the own sensors of the transmitting ITS station rather than to an object identified in a received ITS message.

According to some embodiments, in the list of tracked object tracked_object_lst, each tracked object may be associated with an ITS identifier, an object identifier, a state vector, and optionally by an onboard local identifier.

The ITS identifier corresponds to the identifier included in a DE StationID (DE_StationID) contained in the ITS PDU Header of the received ITS messages. Thus, the ITS identifier identifies the transmitting ITS station in ITS system.

The object identifier is an identifier provided by the CPM service (included in R-ITS-S 112) to each perceived object, included in a CPM. This identifier may be used to track perceived objects over consecutive received CPMs.

The state vector comprises a description information of the tracked object and may include parameters such as the position, the speed, the acceleration, the classification, etc. of the tracked object. The state vector may be continuously updated either by direct measures (from onboard sensors or received ITS messages) or may be predicted through tracking algorithms, such as Kalman filter-based algorithms.

The onboard local identifier corresponds to an onboard identifier given by the onboard sensors/VCAs (115/116) of the transmitting ITS station 110. Thus, each perceived object is associated with an onboard local identifier in order to track it over consecutive video frames.

The algorithm also comprises several steps performed meanwhile the algorithm continuously retrieve the perceived environment of the ITS station. These steps aim at ensuring the privacy of the ITS stations perceived by the ITS station.

At the reception of a CAM/VAM from a transmitting ITS station cam_its_sta (step 500), a receiving ITS station 110 checks whether the ITS station cam_its_sta corresponds to a current tracked object for which an ITS station is already assigned (step 505). In other words, at the reception of an ITS message CAM/VAM, the receiving ITS station determines whether the ITS message is emitted by an ITS station that the receiving ITS station has detected/perceived using its onboard sensors.

More precisely, the receiving ITS station searches whether there is a tracked object in its list tracked_object_Ist which is associated with an ITS identifier equal to the ITS identifier of ITS station cam_its_sta. The ITS identifier of ITS station cam_its_sta may be retrieved from the received ITS message (CAM/VAM) and corresponds to the DE StationID contained in the ITS PDU Header of the received message.

If the transmitting ITS station is already assigned to a tracked ITS station, at step 510, the state vector of the tracked object cam_tracked_object is updated with the values contained in the received ITS message.

According to some embodiments, a tracking algorithm such a Kalman filter-based algorithm may be used to evaluate the state vector. In this case, the values contained in the received CAM/VAM may be considered as the new measurements of the filter.

If the transmitting ITS station is not already assigned to a tracked ITS station, then, at step 515, a track-to-track association is operated between the transmitting ITS station cam_its_sta and the elements of the list tracked_object_lst, so as to determine whether the transmitting ITS station is already tracked or not. It may consist in evaluating a distance (e.g. Euclidean or Mahalanobis) between characteristics of the transmitting ITS station cam_its_sta, and characteristics of already-tracked objects. The compared characteristics may include those described in standard ETSI EN 302 637-2 for CAM or ETSI TR 103 300 for VAM.

Next, according to some embodiments, a nearest neighbour algorithm may be applied in order to identify a potential association. Such algorithms are well known by the state of the art.

When there is no match, at step 520, a new tracked object is instantiated and is associated with the transmitting ITS station cam_its_sta.

Thus, an identifier of the transmitting ITS station cam_its_sta is inserted it in the list tracked_object_lst.

According to some embodiments, the ITS identifier of the new tracked object may correspond to the ITS identifier of the transmitting ITS station retrieved from the DE StationID (DE_StationID) contained in the ITS PDU Header of the received message CAM/VAM.

According to some embodiments, the state vector of the new tracked object may comprise at least some of the value of the fields included in CAM/VAM as described in ETSI standards (e.g., position, speed, heading, etc. of the new tracked object, ITS station cam_its_sta).

When there is a match between the transmitting ITS station cam_its_sta and a tracked object of the list tracked_object_Ist, the corresponding tracked object is then referred to as target_its_sta; and the step 525 follows.

At step 525, it is checked whether the tracked object target_its_sta is already ITS assigned. More precisely, it checks whether the ITS Identifier of the tracked object target_its_sta is set or not. In other words, it is determined if the tracked object target_its_sta is already associated with an ITS station of the ITS system (using the ITS Identifier).

If the ITS Identifier of the tracked object target_its_sta is not set, then at step 530, the ITS identifier of the tracked object target_its_sta is set to the ITS identifier of the transmitting ITS station cam_its_sta. As explained above, the ITS identifier of the transmitting ITS station cam_its_sta may be retrieved from the received message CAM/VAM (in particular its header ITS PDU Header).

If the ITS Identifier of the tracked object target_its_sta is set, having two different ITS identifiers for one ITS station may be the result of an AT change of the transmitting station.

Thus, following step 535 aims at identifying an AT change performed by the transmitting ITS station cam_its_sta. Then, the ITS identifier of the tracked object target_its_sta is updated and set to the ITS identifier of the transmitting ITS station cam_its_sta. The ITS identifier of the transmitting ITS station is retrieved from the DE_StationlD contained in the ITS PDU Header of the received message CAM/VAM.

In view of the identification of an AT change of a transmitting station, the algorithm proposes privacy measures to reflect the AT change policy of the transmitting ITS station in the CPM that may be sent by the receiving ITS station.

Thus, a step 540 privacy measures are taken by modifying the CPM service.

Several alternatives are proposed in the present disclosure.

According to some embodiments, in a first variant, the privacy measures may comprise modifying the current object identifier used by the CPM service to identify the perceived ITS station cam_its_sta. Therefore, it may consist in modifying the object identifier included in the field "objectlD" of the corresponding perceived object container within CPM that may be sent.

According to some embodiments, when the object identifiers objectID are chosen between 0 and 255, a direct new incremental (or decremental) assignation can be done when an AT change is identified. Thus, the current object identifier of cam_its_sta is then released and replaced by a new one. According to some embodiments, the value of an ObjectlD may be chosen such that it may not be easily deduced by a malicious station from a new objectID attributed to a next detected object.

For example, the CPM service may wait until more than two new objects are detected so that there are several new objectID in the next CPM message to be sent.

In another embodiment, the identifiers objectlD are changed for several objects simultaneously, and the order of the new objectID values are changed compared to the previous objectID values.

According to some embodiments, a new object identifier is randomly selected among identifiers which were not previously used, in order to replace the current object identifier of cam_its_sta.

According to some embodiments, a corresponding table between onboard local identifiers and object identifiers objectID may be updated when an object identifier is changed. Indeed, as the onboard local identifier relative to perceived object corresponding to cam_its_sta is not modified, it may be used to keep track of the change of the object identifier.

The subsequent CPM(s) sent by the transmitting ITS station therefore contains the updated object identifiers. Thus, the reflection of AT change policy in the object identifiers, included in CPM that may be sent, allows the privacy of the perceived object to be maintained.

Such a method allows to ensure the privacy of the perceived objects. Indeed, as soon as a change of an ITS identifier of a perceived object is detected, the receiving ITS station thus reflects the AT change when sharing its perceived environment by also changing the perceived object objectID identifier.

Thus, although the messages of the receiving ITS station sharing its perceived environment are intercepted by a malicious ITS station, the latter will not be able to use these messages to track the perceived objects. Indeed, in these messages, the identifiers of the perceived objects are modified as often as required by the AT change policies of the detected objects.

Such a method is a reactive privacy measure enabling the implementation of a flexible yet efficient privacy strategy for messages used to broadcast the list of the perceived objects by the receiving ITS station.

Further, the method is compatible with the existing AT change strategy performed by the C-ITS security architecture, and do not interfere with it.

According to some embodiments, in a second variant, the privacy measures may comprise modifying the current behaviour of the CPM service, in particular the CP Message generation frequency management (refers to the section 6.1.3.1 of TS 103 324). In particular, the privacy measures may consist in modifying the time period between the sending of two consecutive CPM.

For example, if a perceived object container relative to the perceived object cam_its_sta is present in two consecutive CPMs, the time period between the sending of these CPMs may be increased. According to some embodiments, the time period may not exceed a predetermined time limit, defined by the Standard, also referred to as the parameter T_GenCpmMax. Delaying the sending of the second CPM by the transmitting ITS station makes it possible, in particular, to delay the sending of the second CPM at a time when it is less likely to be intercepted by a station that was close to the transmitting ITS station when the first CPM was sent. Consequently, there is less risk that a malicious station intercepts two consecutive CPMs and thus tracks the vehicles described in the two consecutive CPMs. Also by delaying the sending of the second CPM, if the perceived object is in motion, then it will be more difficult for a malicious station which intercepts two consecutive CPM to be able to successfully apply its tracking algorithm to follow the perceived object.

According to some embodiments, the privacy measures may comprise modifying the current behaviour of the CPM service, in particular the CPM service (refer to section 6.1.3.2 of TS 103 324). In particular, each perceived object may be associated with a privacy period, referred to as privacy_period: during the privacy_period of a perceived object, the CPM service is not authorised to report the perceived object in a CPM.

According to some embodiments, the privacy period may depend on the type of the perceived object (an individual may have a longer privacy period than a vehicle) and the motion of the object (a slow object may have a longer privacy period than a fast-moving object).

According to some embodiments, before sending a CPM, it may be checked whether the period of time between the current time and the time of the last sending of a CPM including cam_its_sta is greater than said privacy period privacy_period. If it is greater, then the CPM is sent. Otherwise, the CPM is not sent.

According to some embodiments, in a third variant, the privacy measures may comprise modifying the order of the Perceived Object Containers (POC) 460 in the CPM message. The order in which the perceived objects are described changes from one CPM message to another. Consequently, there is less risk that a malicious station will identify the vehicles which are described in two consecutive CPMs.

The privacy measures may comprise the three described variants, which may be complementary. Thus, each of the three may be combined in the privacy measures (e.g. (1 and 2), (1 and 3), (2 and 3) or (1 and 2 and 3)).

According to some embodiments, the privacy measures may be applied only to the ITS station cam_its_sta.

According to some embodiments, the privacy measures may be applied to a plurality of objects perceived by the CPM service, the plurality of perceived objects including at least the ITS station cam_its_sta.

According to some embodiments, the considered plurality may correspond to all the perceived objects managed by CPM service or only to a subset of the plurality of perceived objects, the size of the set being predetermined or random (while ensuring the presence of ITS station cam_its_sta in the considered set).

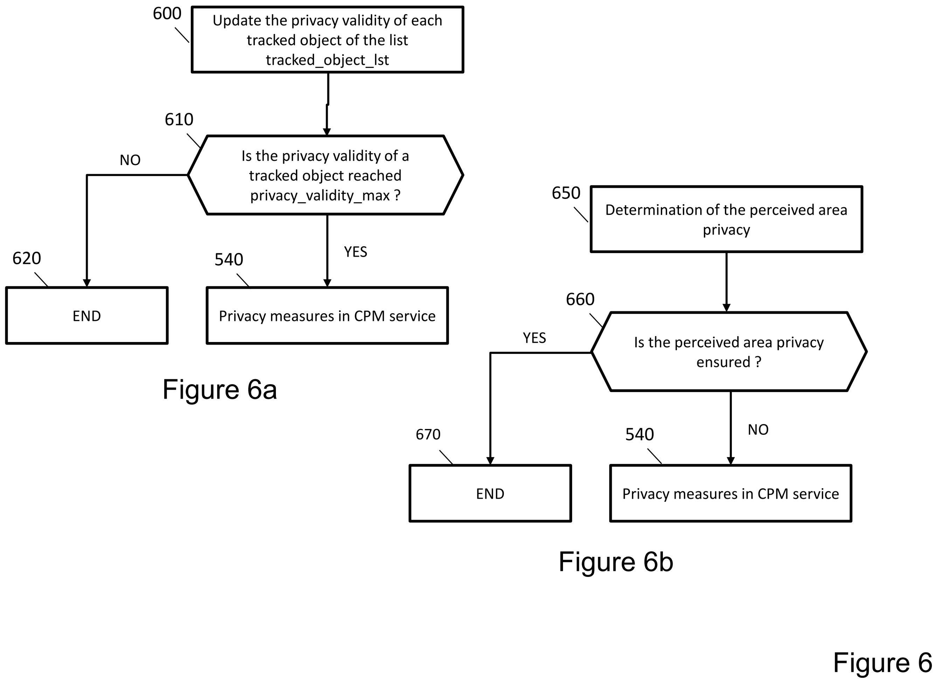

**Figure 6** includes **Figures 6a** and **6b** which illustrate, using two flowcharts, steps of a second and third examples of processing methods for enhancing privacy in an ITS system, in particular when an ITS station shares its perceived environment with another ITS station using CPMs.

The illustrated methods may be implemented by a transmitting ITS station, such as a Vehicle ITS Station V-ITS-Ss 121 or a Roadside ITS Station R-ITS-S 112. For the purpose of illustration, with reference to Figure 1, the algorithm is implemented in the Road Side ITS station R-ITS-S 112.

Contrary to the algorithm described with reference to Figure 5, the steps of the algorithms described with reference to Figures 6a and 6b are periodically launched, at a given fixed period and not at reception of an ITS message. Therefore, the ITS station checks itself whether the privacy of tracked object is ensured.

In a similar manner to the algorithm described with reference to Figure 5, the algorithm continuously retrieves the perceived environment of the transmitting ITS station from the Local Dynamic Map 230 or directly from its sensor data fusion module 114.

According to some embodiments, the tracked objects may be identified by their respective object identifier, and optionally with their respective onboard local identifier and ITS identifier.

According to this embodiment, a new additional parameter, referred to as the "privacy validity" of the object identifier, is associated with each tracked object.

The privacy validity of an object identifier corresponds to the time elapsed between the current time and the time when the current object identifier has been assigned to the tracked object.

Thus, for each tracked object of the list tracked_object_lst, it is checked whether the privacy validity reaches a predetermined threshold, referred to as privacy_validity_max. If so, then the algorithm may apply at least one of the privacy measures described with reference to step 540 of Figure 5.

The algorithm of **Figure 6a** is performed by an ITS station. At step 600, the privacy validity of each tracked object of the list tracked_object_lst is updated. It consists in computing the value of the elapsed time between the current time and the time when the current object identifier has been assigned to the tracked object.

Next, at step 610, it is checked whether a privacy validity of a tracked object of the list tracked_object_Ist is greater than (or equal to) the value privacy_validity_max.

If the privacy validity is less than the value privacy_validity_max, the algorithm end at step 620.

Otherwise, step 540 is performed for the identified tracked object. In such a case, the privacy validity is reset to zero.

The algorithm of **Figure 6b** is performed by an ITS station which detects objects through its own onboard sensors. These objects may be located in area 117, which is referred to as "perceived area" in the following.

At step 650, the algorithm determines the value of an additional parameter called "perceived area privacy".

According to some embodiments, the perceived area privacy may correspond to a level (e.g. an integer) that may be based on a number of objects perceived by the onboard sensors in the perceived area.

According to some embodiments, when computing the perceived area privacy, the type of ITS stations, whether there are embedded in vehicles or VRUs, may be considered. In such a case, according to some embodiments, the perceived area privacy may consist in performing a weighted sum, based on the type of each ITS station.

For example, as a Road side unit may have a higher probability to track the other ITS stations, thus, it may be associated with a higher weight (for example twice) than an ITS vehicle. Besides, a VRU may have a lower probability to track the other ITS stations it may be associated with a lower weight (for example half) than an ITS vehicle.

The perceived area privacy may be associated with a privacy threshold, referred to as area_privacy_max. The privacy threshold area_privacy_max thus indicates whether the privacy of the perceived area is ensured or not.

As a matter of fact, the more there are other ITS stations in the environment of a transmitting ITS station, the more likely it is that a malicious station will be present in the vicinity of the transmitting ITS station. Therefore, when a transmitting ITS station is surrounded by a large number of stations, it is more likely that a malicious station is present in the vicinity of the transmitting ITS station and intercepts messages sent by the transmitting ITS station. Thus, it is provided a way to verify that the transmitting ITS station is in an area where its privacy is guaranteed, i.e. that the number of ITS stations in the privacy zone is below the privacy threshold.

In particular, if the perceived area privacy is less than the privacy threshold, the privacy of the perceived area may be considered ensured. Otherwise, at least one of the privacy measures (as defined in step 540) may be implemented.

According to some embodiments, the perceived area privacy may reflect the presence or not of a malicious ITS station in the vicinity of the ITS station performing the algorithm.

The identification may be performed by analysing the received ITS messages. If a station which belongs to the perceived area is identified in a Misbehaviour Report sent by an ITS station (specified in standard ETSI TR 103 460), the privacy in the perceived area is not considered as ensured. Next, at least one of privacy measures (as defined in step 540) may be implemented.

At step 660, it is checked whether the perceived area privacy is ensured or not. If so, the algorithm ends (step 670).

If the perceived area privacy is not ensured, step 540 is performed.

In such a case, only the privacy measures relative to a plurality of objects perceived by CPM service may be considered.

In such a case, according to some embodiments, the considered set may be for instance all the perceived objects managed by the CPM service or only a partial set of the perceived objects, the size of the set being fixed or random.

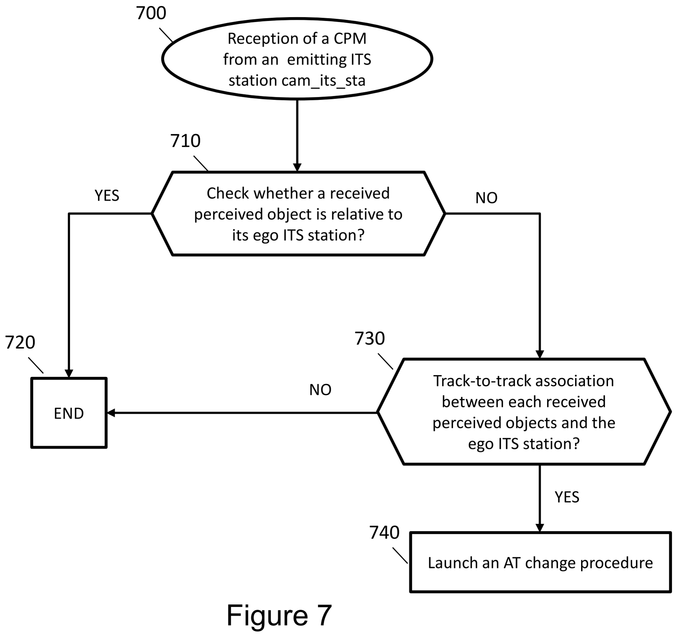

**Figure 7** describes, using a flowchart, steps of a fourth example of processing method for enhancing privacy in an ITS system, in particular when an ITS station shares its perceived environment with another ITS station using CPMs.

With reference to Figure 1, the algorithm may be performed by ITS station 120. As explained before, the ITS station 120 has to ensure its privacy by performing an AT change over the time. In the following, the ITS station is referred to as "ego ITS station".

In this embodiment, the method aims at detecting whether a transmitting ITS station referred to as rcv_cpm, sending information to a receiving ITS station referred to as the ego ITS station, has changed the object identifier of the receiving ITS station, when transmitting CPMs (received by the receiving ITS station, the ego ITS station). The change of the object identifier for the given receiving ITS station (the ego ITS station) by the ITS transmitting station rcv_cpm thus triggers the receiving ITS station (the ego ITS station) to launch an AT change procedure, in order to change its AT and therefore its ITS identifier.

Such a method ensures the privacy of the receiving ITS station (the ego ITS station), in particular when the change of the object identifier by the transmitting ITS station is induced by the detection of a malicious ITS station.

Before the steps illustrated in Figure 7, the ego ITS station chooses a first AT associated with a first ITS identifier according to the AT policy as explained hereinbefore. The ego ITS station therefore uses the first AT and the first ITS identifier for sending CPM and/or CAM to other ITS stations of the ITS.

Then, the ego ITS station receives CPMs from various transmitting stations of the ITS. For each received CPM associated with a transmitting ITS station of the ITS, for example the rcv_cpm, the ego ITS station:
- detects whether the CPM contains information relative to itself or not. For example, to do that the ego ITS station analyses the positions of the perceived objects in the CPM, and compares these positions to its own position. More generally, the ego station performs a track-to-track association to determine the possibility to associate the ego ITS station with one of the perceived objects of the received CPM, similarly to step 515; and
- stores, for the rcv_cpm ITS station, the identifier used in the CPM to identify the ego station, referred to as current_objectlD.

As the ego ITS station may receive CPMs from several transmitting ITS stations, the ego ITS station may therefore store several values of current_objectID, each one associated with the ITS identifier of the transmitting ITS station. For example, the ITS identifier of the transmitting ITS stations may be retrieved from the ITS PDU header of each received CPM (DE_StationID).

It should be understood that there are as many stored identifiers as there are transmitting stations whose CPMs, containing information about the ego station, were received by the ego station. For the sake of the clarity of the description, the method is described hereinafter with reference to successive CPMs sent by a same rcv_cpm ITS station, so it will be made reference to one current_objectID.

When receiving a subsequent CPM (at step 700) from a transmitting ITS station referred to as the rcv_cpm ITS station, the ego ITS station checks whether a perceived object container of the received CPM comprises its identification information (step 710). To do that, the ego ITS station analyses, in each perceived object container, the field "objectID" and compares it with the current_objectID.

If a perceived object container relating to the ego ITS station is found (i.e., that the value of the current_objectlD is included in an object container of the received CPM), the algorithm ends at step 720.

Otherwise, a track-to-track association 730 may be performed between the ego ITS station and the list of perceived objects contained in CPM of the rcv_cpm ITS station, so as to identify a match. In other words, at this step, the algorithm tries to determine the possibility to associate the ego ITS station with one of the perceived objects (provided by the received CPMs), similarly to step 515.

When there is no match, the algorithm ends. This means that the ego ITS is not perceived by the rcv_cpm ITS station, and therefore that no information relating to the ego station is broadcast by the rcv_cpm ITS station.

When there is a match, this means that the rcv_cpm ITS station has changed the identifier objectID for transmitting information relating to the ego station in CPM. The change of the identifier objectlD used in CPM may be triggered, for example, by the detection of a malicious vehicle by the rcv_cpm ITS station in its vicinity.

Therefore, by prevention, the ego ITS station launches an AT change procedure, in order to change its AT and consequently its ITS identifier.

Next, at step 740, the ego ITS station infers that the rcv_cpm ITS station has taken a privacy measure involving its ego ITS station, for instance according to the methods illustrated in Figure 5, and launches an AT change procedure in order to modify its current ITS identifier.

Moreover, the value of the parameter current_objectlD relative to the ego ITS station may be updated and set to the value included in the field "objectID" of the perceived object container relative to the ego ITS station.

Described steps of the method are performed for each transmitting ITS station of the ITS whose CPMs are received by the ego ITS station.

To sum up, according to some embodiments, a transmitting method, implemented at a receiving station, comprise:
- identifying itself with a first identifier for sharing information in the ITS, using for example CAM;
- receiving, from a transmitting ITS station, a first message in which a second identifier is associated with the receiving ITS station;
- receiving, from the same transmitting station, a second message in which a third identifier is associated with the receiving ITS station, the second identifier being different from the third identifier;
- identifying the receiving ITS station with a fourth identifier for sharing information in the ITS, the fourth identifier being different from the first identifier and in replacement of the first identifier.

Such a method enables a receiving station to implements AT change measures when detecting that another ITS station, sharing information about the receiving station (when sharing its perceived objects), has changed the identifier of the receiving station.

As the change by the other station may be triggered by the detection in its vicinity of a malicious ITS station, such a method enables the improvement of the privacy of the receiving station which may not have detected the malicious ITS station.

This method thus may constitute a countermeasure to the detection of a malicious ITS station, and more generally improve the privacy the receiving station.

According to some embodiments, the first identifier may be the ITS identifier of the receiving station, relating to the currently used AT.

According to some embodiments, the first and second messages are CPMs, including objects perceived by the transmitting ITS station.

According to some embodiments, the fourth identifier is the ITS identifier associated with the new AT used by the receiving ITS station at the end of the AT change procedure.

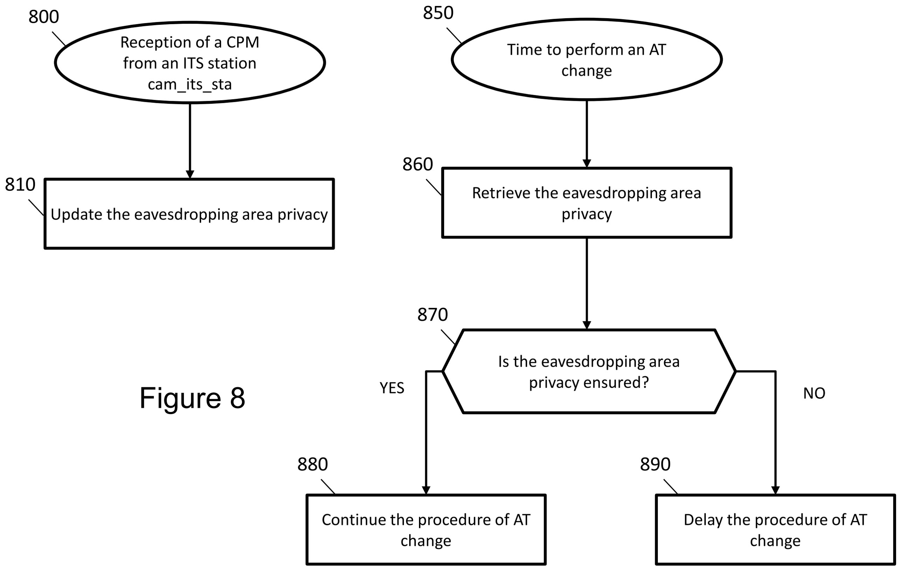

**Figure 8** describes, using flowcharts, steps of a fifth example of processing method for enhancing privacy in an ITS system, in particular when an ITS station shares its perceived environment with another ITS station using CPMs.

With reference to Figure 1, the algorithm may be performed by ITS station 120. As explained before, the ITS station 120 has to ensure its privacy by performing an AT change over the time. In the following, the ITS station is referred to as "ego ITS station".

For a given ITS station, an "eavesdropping area privacy" value may be computed from the density of objects detected inside a given area.

The given area may correspond to an area of a shape (such as a polygon or a circle) including the perceived objects identified in the received CPMs, and/or the objects perceived by on-board sensors and/or the transmitting ITS stations detected by the ego ITS station.

The given area may also include some fixed objects known in advance (included in the Local Dynamic Map module 330) such as Road Side Units.

Moreover, the size of the geometry area may be reduced by a maximum distance between the ego ITS station and the perceived objects. For instance, a maximum distance of 100 meters in an urban area may be considered. The maximum distance may also depend on the speed of the vehicle associated with the ego ITS station: a higher distance may be used at higher speed. The size of the geometric area may also take into account some geographical information, such as the position of buildings to exclude them from the area. The area may also take into account the planned trajectory of the ego ITS station: the area may have a longer distance around the planned road for the vehicle.

According to some embodiments, the eavesdropping area privacy value may be computed from the number of objects detected by an ITS station using its onboard sensors, and/or from the number of transmitting ITS stations (that may be computed by analysing the received ITS messages) and/or from the number of the perceived objects identified in the received CPMs. In other words, the privacy of the eavesdropping area is evaluated using the number of ITS stations in the eavesdropping area: the more ITS stations there are in the eavesdropping area, the less the privacy of the eavesdropping area is ensured.

For instance, it may consist in performing a sum of all these elements or a weighted sum if some elements are considered more important (typically objects perceived by onboard sensors) than others.

The eavesdropping area privacy may be compared to a privacy threshold, referred to as area_privacy_max. The privacy threshold area_privacy_max may indicate whether the privacy of the eavesdropping area is ensured or not.

In particular, if the eavesdropping area privacy is less than the privacy threshold, the privacy of the eavesdropping area may be considered ensured. Otherwise not.

At reception of a CPM (step 800), referred to as rcv_cpm, the ego ITS station updates the value of its eavesdropping area privacy by analysing each perceived object container of the received CPM rcv_cpm (step 810).

In particular, if the eavesdropping area privacy is computed as a sum of the perceived objects inside the given area, the update may consist in identifying the new perceived objects in the given area and incrementing the value of the eavesdropping area privacy for each newly perceived object in the given area.

Similarly, for each previously perceived object which is no longer currently perceived in a predetermined number of consecutive received CPMs (e.g., 3), the value of the eavesdropping area is decremented by the number of non-longer perceived objects.

When the ego ITS station plans to perform an AT change (step 850) according to the current AT change strategy of the ego ITS station, the current value of the eavesdropping area privacy is first retrieved (step 860), and at step 870, it is checked whether the eavesdropping area privacy is ensured.

As explained above, this consists in comparing the current value of "eavesdropping area privacy" with the predetermined threshold area_privacy_max.

If the privacy of the eavesdropping area is ensured, then the AT change procedure is performed (step 880).

If the privacy of the eavesdropping area is not ensured, then the AT change procedure is delayed to a next date, which is either fixed or selected randomly (step 890).

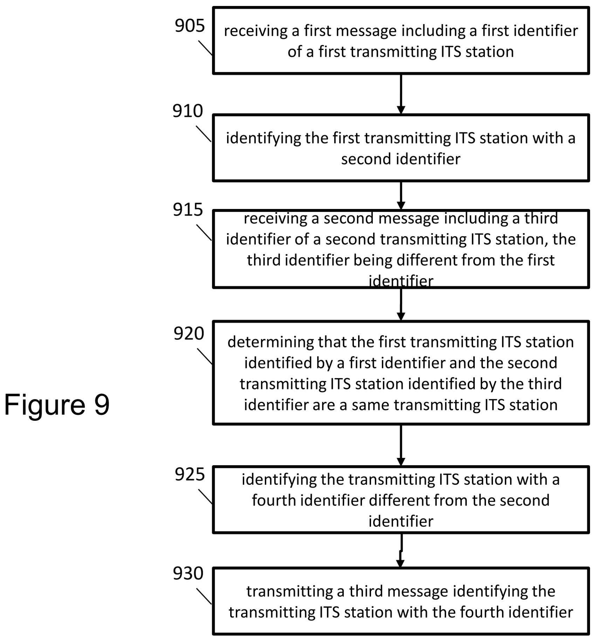

**Figure 9** describes, using flowcharts, steps of a transmitting method enhancing privacy in an ITS system, in particular when an ITS station shares its perceived environment with another ITS station using CPMs.

In particular, the proposed method aims at detecting when a station changes its identifier according to its AT change policy, and to change accordingly, at a receiving ITS station, its object identifier, used in CPM service in order to ensure the privacy of the station.

The illustrated algorithm may be implemented by a transmitting ITS station, such as a Vehicle ITS Station V-ITS-S or a Roadside ITS Station R-ITS-S.

For the purpose of illustration, with reference to Figure 1, the algorithm is implemented by the Road Side ITS station R-ITS-S 112. As explained above, the R-ITS-S 112 comprises a CPM service and can send CPMs 160 to the other (receiving) ITS stations of the ITS system.

At step 905, the receiving ITS station receives a first message in which a first identifier is used to identify a first transmitting ITS station.

The first message is then processed by the receiving ITS station (step 910), as explained hereinbefore. In particular, the perceived objects are stored as a list of tracked objects, referred to as tracked_object_lst.

Accordingly, the first transmitting ITS station (which is considered as a perceived object for the receiving ITS station) is listed in a list of tracked objects, referred to as tracked_object_Ist. The first transmitting ITS station is associated with an onboard local identifier, referred hereinafter as a second identifier, and at least both of this information are stored in the tracked_object_lst.

At step 915, the receiving ITS station receives a second message from a second transmitting ITS station, that may be one of a Vulnerable Road Users Awareness Message (VAM) or Cooperative Awareness Message (CAM).

In the second message, the second transmitting ITS station is associated with a third identifier different from the first identifier.

As mentioned above, the second message comprises additional information, such as the second station location.

When processing the second message, the receiving ITS station determines, at step 920, whether the first transmitting ITS station identified by a first identifier and the second transmitting ITS station identified by the third identifier are a same transmitting ITS station or not.

Indeed, as previously explained, with the AT change policies implemented by the ITS station, it may happen that a receiving ITS station receives messages in which two different identifiers are used to identify a same transmitting ITS station.

To determine whether the identifiers refer to a same ITS station, the receiving ITS station compares the location of the first and second stations. According to some embodiments, if the distance (e.g., Euclidean) between the location of the first and second transmitting stations is below a predetermined threshold, then the first and the second ITS transmitting ITS station are considered being the same station.

According to some embodiments, the receiving ITS station first tracks the first transmitting ITS station associated with the second identifier by analysing data captured by its embedded sensors.

As a result of the tracking, the location of the first transmitting ITS station is obtained.

Then, the distance between the location of the first transmitting ITS station, resulting from the tracking, and a second location of the second transmitting ITS station identified by the third identifier is calculated.

The second location of the second transmitting ITS station retrieved from the second message, in which the location of the second transmitting ITS station is included.

Once the distance is obtained, it is compared to a predetermined threshold. The comparison step helps to determine whether the first and the second transmitting ITS stations are the same or not.

Thus, when the distance is below the predetermined threshold, then it is considered that the first and the second transmitting ITS stations are the same.

As soon as the receiving ITS station determines that the first and second ITS transmitting stations are the same, the receiving ITS station implements measures in order to ensure the privacy of the transmitting station.

In particular, the receiving ITS station changes the object identifier of the transmitting station, and uses a fourth identifier different from the second identifier (step 925). Then the receiving ITS station shares the new information of the transmitting station, by sending a third message, e.g. a CPM (step 930).

According to some embodiments, the receiving ITS station may also generate data characterising that the transmitting ITS station previously identified with the second identifier, and that the transmitting ITS station now identified with the fourth identifier corresponds to a same transmitting ITS station. In particular, a link may be established between the perceived object associated with the first transmitting ITS station and the second transmitting ITS station that shares its information using a CAM.

According to some embodiments, in order to improve the privacy, it may be possible to change the object identifiers of several ITS stations (or of all the ITS stations) simultaneously.

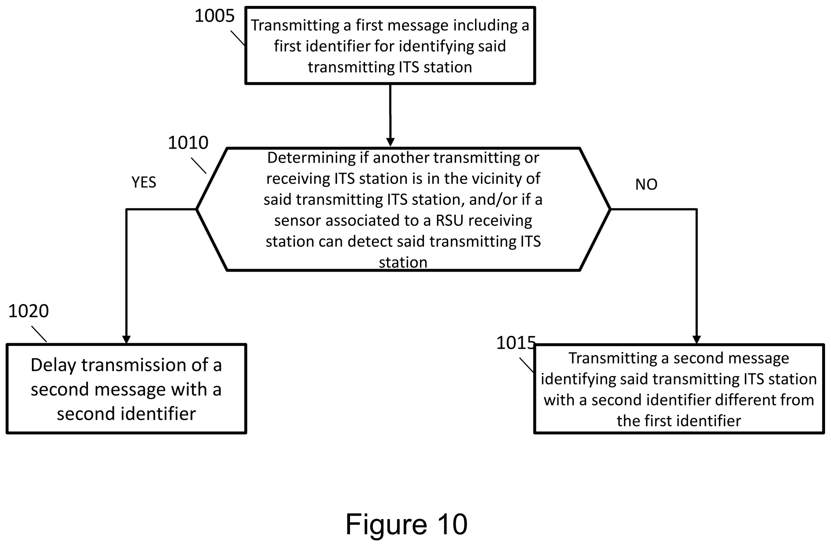

**Figure 10** describes, using a flowchart, steps of a transmitting method enhancing privacy of an ITS system in which an ITS station shares its perceived environment with another ITS station through a CPM. The algorithm of **Figure 10** generalizes steps of the fifth example (illustrated by Figure 8), and is performed by a transmitting ITS station.

The method according to this embodiment aims at ensuring that there is no risk of eavesdropping when the transmitting ITS station plans to change its AT according to its AT change strategy. To do that, similarly to the embodiment illustrated by Figure 8, the transmitting ITS station determines if there is a risk of eavesdropping where the transmitting ITS station is located. If there is no chance of eavesdropping, then the AT measures to change the AT are launched. Otherwise, the AT change is delayed.

The present embodiment therefore aims at delaying the change of AT and the sending of a message with the new AT to a later time to reduce the risk of interception the message.

At step 1005, the transmitting ITS station sends a first message including a first identifier, its ITS identifier, which identifies said transmitting ITS station within the ITS.

Next, the transmitting ITS station determines if there is any ITS vehicle in its vicinity. The vicinity may be an area, of a geometrical shape around the location of the ITS station (e.g. a circle or a square in which the transmitting ITS station is located. The area may be defined as the eavesdropping area of the embodiment illustrated in Figure 8.

Therefore, the transmitting ITS station determines whether another transmitting or receiving ITS station is in the vicinity of said transmitting ITS station or not, and/or whether a sensor associated to a RSU receiving station can detect said transmitting ITS station or not (step 1010).

To do that, the transmitting ITS station may use the information of the received CAMs and/or CPMs, and of the embedded sensors and compares this information with its location.

According to some embodiments, the transmitting ITS station may for example uses the list of perceived objects of received CPM(s). Then, the transmitting ITS station compares the distance between its location and at least some of the perceived objects to a predetermined threshold.

According to some embodiments, the transmitting ITS station may for example, determine a computed privacy value of the area, by comparing the area privacy to a predetermined threshold, as explained in relation to Figure 8 (steps 860 and 870). In the event where there is actually an ITS station in the vicinity of the ITS transmitting station, the exchanged messages may be intercepted, and the transmission of a second message with a second identifier, i.e. the new ITS identifier associated with the new AT, is delayed (step 1020).

Otherwise, a second message identifying said transmitting ITS station with a second identifier different from the first identifier is transmitted (step 1015) by message (CAM and/or CPM).

The method according to this embodiment makes it possible to adapt time of the sending of messages including a new identifier associated with a new AT changed according to the AT change strategy of the transmitting ITS station. Depending on whether the privacy of the transmitting ITS station is ensured or not, the sending of messages, with the new identifier is maintained or delayed.

Thus, if the transmitting ITS station is exposed to a risk of eavesdropping, the sending of messages, with the new AT and the new associated identifier, is then delayed to a later time.

Such a method makes it possible to prevent a transmitting ITS station to send messages with its new AT (equivalent to a new identity) when the messages of the transmitting ITS station are very likely to be intercepted.

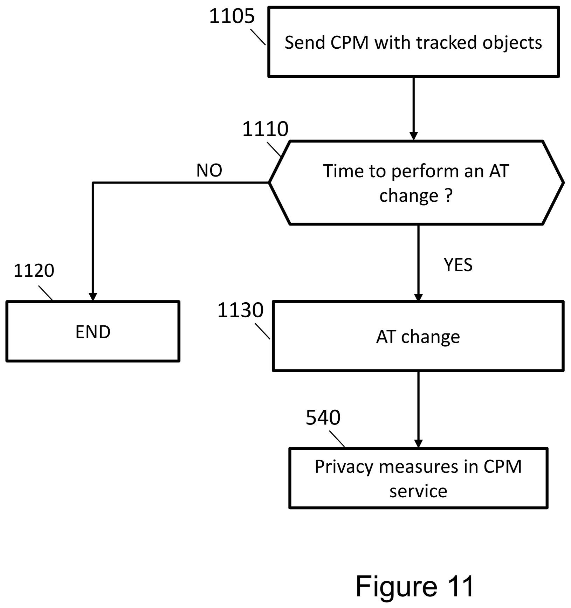

**Figure 11** describes, using flowcharts, steps of a sixth example of processing method for enhancing privacy in an ITS system, in particular when an ITS station shares its perceived environment with another ITS station using CPMs.

With reference to Figure 1, the algorithm may be performed by an ITS station 120. As explained before, the ITS station 120 has to ensure its privacy by performing an AT change over time. In the following, the ITS station is referred to as "ego ITS station".

The aim of this embodiment is to handle the case of a malicious station that would try to track an ego station, only by analysing the content of messages transmitted by said ego station.

If said ego station changes its own identifier, but if the content of the transmitted message remains the same (e.g. if the list of perceived objects identifiers remains the same), the malicious station could easily re-identify the ego station.

To avoid such tracking, in this embodiment, the AT change strategy of the ego ITS station is reflected within the CPM sent by the ego ITS station: indeed, the modification of the identifiers within the CPMs is triggered by the AT change of the ego ITS station.

In this example the ego ITS station is equipped with embedded perception or onboard sensors, such as image sensors, connected to an analysis module that processes the stream captured by the sensors as described in relation to Figure 1.

At step 1105, the ego ITS station detects perceived objects within the observation area of the ego ITS station. Then, the ego ITS station sends a CPM message containing a list of the perceived objects, in which each perceived object has an assigned object identifiers objectID.

Next, at step 1110, the ego ITS station checks whether a AT change shall be performed according to the AT change strategy implemented by the ego ITS station. In the case that no AT change shall be performed according to the current AT change strategy of the ego ITS station, then the algorithm ends 1120.

If an AT change shall be performed, the ego ITS station launches an AT change procedure 1130, in order to change its AT and therefore its ITS identifier used for sending ITS messages.

Consequently, the privacy of the ego ITS station is ensured when the ego station sends ITS messages within the ITS. However, if no further privacy measure is taken, a malicious station may use another method to identify the transmitting ego ITS station. The successive CPM messages sent by the transmitting ego ITS stations may have the same contents, i.e. they may contain the same object identifiers for all perceived objects. Thus, the malicious station when receiving a CPM message with a new ITS identifier may compare the list of object identifiers of the new CPM message with the stored lists of object identifiers from previously received CPM messages.

If during these comparisons, the station detects that a previously received CPM is similar to the newly received CPM, the malicious station can deduce that there was an AT change and link the new ITS identifier with the previous ITS identifier.

To detect similarities, the malicious may for example:
- detect the use of a same object identifier for a same perceived object. In other words, the malicious station may detect that a perceived object associated with a localisation and state vector is identically identified in the newly received CPM and a previously received CPM.
- The malicious station could also use the order of the objects described in the list of Perceived Object Container 460 of the CPM message to identify the transmitting ego ITS station. Indeed, if the same perceived objects are described in the same order in CPM message, the malicious station can deduce that the transmitting ego ITS station is the same.

To counter this attack, this embodiment proposes at step 540 to trigger privacy measure in response to the change of AT by the ego ITS station.

Thus, the transmitting ego ITS station may apply at least one of the privacy measures described with reference to step 540 of Figure 5.

In such a case, only the privacy measures relative to a plurality of objects perceived by CPM service may be considered.

In such a case, according to some embodiments, the considered set may be for instance all the perceived objects managed by the CPM service or only a partial set of the perceived objects, the size of the set being fixed or random.

The privacy measures allow to change the object identifiers and/or avoid emitting some CPM messages and/or changing the order of the perceived objects as described in step 540, and thus improve the privacy of the transmitting ITS station.

In other words, it is disclosed a method, intended for an Intelligent Transport System (ITS) comprising transmitting and receiving ITS stations, the method comprising the following steps, at a transmitting ITS station:
transmitting a first message including a first identifier identifying the transmitting ITS station, and including a first object identifier for identifying an object detected by the transmitting ITS station; and,
transmitting a second message identifying the transmitting ITS station with a second identifier different from the first identifier, the second message including a second object identifier for identifying the object previously identified with the first object identifier, the second object identifier being different from the first object identifier.

Preferably, the first and second messages are CPM messages.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon referring to the foregoing illustrative embodiments, which are given by way of example only and which are not intended to limit the scope of the invention, that being determined solely by the appended claims. In particular, the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method, intended for an Intelligent Transport System (ITS) comprising transmitting and receiving ITS stations, the method, at a receiving ITS station, comprising:
- in response to determining that a transmitting ITS station has changed its identifier used to transmit ITS messages, transmitting an ITS message reporting the transmitting ITS station as a newly detected object by changing its internally-assigned identifier.

2. The method of claim 1, wherein transmitting an ITS message reporting the transmitting ITS station as a newly detected object by changing its internally-assigned identifier comprises transmitting an ITS message reporting a plurality of detected objects as newly detected objects by changing their respective internally - assigned identifiers.

3. The method of claim 1, the method comprising the following steps, at the receiving ITS station:
- receiving (905) a first message including a first identifier of a first transmitting ITS station;
- identifying (910) the first transmitting ITS station internally with a second identifier;
- receiving (915) a second message including a third identifier of a second transmitting ITS station, the third identifier being different from the first identifier;
- determining (920) that the first transmitting ITS station identified by a first identifier and the second transmitting ITS station identified by the third identifier are a same transmitting ITS station; and
- identifying (925) the same transmitting ITS station internally with a fourth identifier different from the second identifier, in replacement of the second identifier; and,
- transmitting (930) a third message identifying the transmitting ITS station with the fourth identifier.

4. The method of claim 1, wherein the determining step comprises:
- determining a first location of the first transmitting ITS station associated with the second identifier by analysing data captured by a sensor of the receiving ITS station;
- calculating a distance between the first location and a second location of the second transmitting ITS station identified by the third identifier, the second location being included in the second message; and,
- in a case where the distance is below a predetermined threshold, determining that the first transmitting ITS station and the second transmitting ITS station are the same transmitting ITS station.

5. The method according to claim 3, wherein the first message and/or the second message is a Vulnerable Road Users Awareness Message (VAM) or Cooperative Awareness Messages (CAM), and the third message is a Collective Perception Message (CPM).

6. A computer program product for a programmable apparatus, the computer program product comprising a sequence of instructions for implementing a method according to any one of claims 1 to 5, when loaded into and executed by the programmable apparatus.

7. A computer-readable storage medium storing instructions of a computer program for implementing a method according to any one of claims 1 to 5.

8. A receiving station of an Intelligent Transport System, ITS, the station comprising a processor configured to:
- In response to determining that a transmitting ITS station has changed its identifier used to transmit ITS messages, transmitting an ITS message reporting the transmitting ITS station as a newly detected object by changing its internally-assigned identifier.
